# EUROPÄISCHE PATENTANMELDUNG

(11) **EP 1 071 244 A2**
(43) Veröffentlichungstag der Anmeldung: **24.01.2001**
(21) Anmeldenummer: 00112114.4
(22) Anmeldetag: 06.06.2000
(51) Int. Cl.: H04L 12/56, H04L 29/14

(54) **Übertragungsnetzwerk mit redundanten Übertragungsstrecken**

(30) Priorität: 22.06.1999 DE 19928483
(71) Anmelder: Tenovis GmbH & Co. KG, 60227 Frankfurt (DE)
(72) Erfinder: Maier, Klaus, 61231 Bad Nauheim (DE); Weisenburger, Alfons, 63225 Langen (DE)

(57) **Zusammenfassung**

Ein Übertragungsnetzwerk umfaßt eine Mehrzahl von Sender-/Empfängermodulen, die über zwei Netze mit identischer Struktur bildende Übertragungsstrecken und Knoten miteinander verbunden sind. Ein Sender-/Empfängermodul für ein solches Übertragungsnetzwerk hat zwei Schnittstellen zum Anschließen an jeweils eines der zwei Netze, wobei die Schnittstellen von einer Zentraleinheit des Moduls gelieferte Nutzdaten in gleicher Weise senden, aber nur eine der Schnittstellen empfangene Nutzdaten an die Zentraleinheit liefert.

## Beschreibung

### Stand der Technik

Die Erfindung betrifft ein Übertragungsnetzwerk mit einer Mehrzahl von Sender-/Empfängermodulen, von Übertragungssstrecken zum Übertragen von Daten zwischen den Sender-/Empfängermodulen und von die Übertragungsstrecken miteinander verbindenden Knoten zum selektiven Weiterleiten der Daten von einer Übertragungsstrecke auf eine andere. Die Übertragungsstrecken sind teilweise redundant, so daß eine Übertragung von Daten zwischen den Sender-/Empfängermodulen auf unterschiedlichen Wegen durch das Übertragungsnetzwerk möglich ist.

Solche redundanten Übertragungestrecken dienen dazu, die Fortsetzung des Datenverkehrs zwischen allen Sender-/Empfängermodulen des Netzwerks ermöglichen zu können, auch wenn einzelne Übertragungsstrecken gestört sind.

Eine Redundanz aller Übertragungsstrecken des Netzwerks beziehungsweise ihre Ersetzbarkeit durch eine andere ist nicht zu erreichen, solange die einzelnen Sender-/Empfängermodule nur über jeweils eine einzelne Übertragungsstrecke an die Knoten des Netzwerks angebunden sind. Wenn man aber eine Anbindung der Module an die Knoten über jeweils wenigstens zwei Übertragungsstrecken vorsieht, so ergibt sich das Problem, sicherzustellen, daß ein von einem Sendermodul über eine oder beide seiner Übertragungsstrecken gesendetes Datenpaket vom Empfängermodul mit Sicherheit einmal, keinesfalls aber zweimal empfangen wird.

### Vorteile der Erfindung

Eine einfache Lösung dieses Problems bietet ein Übertragungsnetzwerk der eingangs genannten Art, dessen Übertragungsstrecken und Knoten zwei Netze mit identischer Struktur bilden, wobei die Sender-/Empfängermodule mit jedem der zwei Netze über jeweils eine Schnittstelle verbunden sind. Indem jedes Sendermodul ein an ein Empfängermodul zu übertragendes Nutzdatenpaket in gleicher Weise an beide Netze ausgibt, ist sichergestellt, daß - bei ordnungsgemäßem Funktionieren der Netze - das Nutzdatenpaket das Empfängermodul an seinen beiden Schnittstellen in gleicher Weise erreicht, woraufhin die Schnittstellen von zwei einander entsprechenden Paketen jeweils eines verwerfen. Im Störungsfalle erreicht aber immer noch eines der Pakete das Empfängermodul und kann dort ausgewertet werden.

Da eine solche Verwerfung überzähliger Datenpakete in einfacher Weise am Empfängermodul ausgeführt werden kann, können die zwei Netze empfangene Daten in einfacher Weise unabhängig voneinander übertragen. Eine Koordination der Netze untereinander ist nicht erforderlich.

Die einander entsprechenden Knoten der zwei Netze sind vorzugsweise durch sogenannte vertikale Übertragungsstrecken verbunden. Diese ermöglichen im Falle einer Störung die Übertragung von Datenpaketen von Sendermodulen oder für Empfängermodule, die von einer Störung der Übertragungsstrecke betroffen sind, über die vertikale Verbindungsstrecke.

Des weiteren ist bevorzugt, daß die Knoten miteinander und/oder mit den Sender-/Empfängermodulen Prüfdatenpakete austauschen, um Störungen von Verbindungsstrecken zu erfassen. In Kenntnis dieser Störungen sind die Knoten dann in der Lage, eine Datenübertragung zwischen zwei Modulen im Störungsfall automatisch auf eine redundante Übertragungsstrecke umzuleiten. Insbesondere können sie solche Daten über eine vertikale Übertragungsstrecke von einem Netz in das andere übertragen.

Die Erfindung sieht ferner ein Sender-/Empfängermodul vor, das insbesondere in einem Übertragungsnetzwerk der oben beschriebenen Art einsetzbar ist, das eine Zentraleinheit als Quelle und/oder Senke von Daten und zwei parallel an die Zentraleinheit angeschlossene Schnittstellen zum Anschließen an Verbindungsstrecken des Übertragungsnetzwerks umfaßt, wobei die Schnittstellen von der Zentraleinheit gelieferte Nutzdaten in gleicher Weise senden, empfangene Nutzdaten aber nur von einer der Schnittstellen an die Zentraleinheit geliefert und von der anderen verworfen werden. Dabei sollte die Zentraleinheit zweckmäßigerweise über Mittel verfügen, um zu bestimmen, welche der Schnittstellen Nutzdaten an sie liefert, und welche die empfangenen Nutzdaten verwirft. Falls eine der zwei Übertragungsstrecken, über die das Modul angeschlossen ist, gestört ist, kann die Zentraleinheit somit diejenige Schnittstelle als Lieferant von Daten auswählen, die von der Störung nicht betroffen ist.

Falls das Übertragungsnetzwerk, in dem ein solches Sender-/Empfängermodul eingesetzt wird, für die Übertragung von Broadcastdaten eingerichtet ist, also von Daten, die an eine Mehrzahl von Empfängermodulen gleichzeitig adressiert sind, ist es zweckmäßig, daß jede Schnittstelle über Mittel verfügt, um empfangene, spezifisch an das Modul adressierte Daten von Broadcastdaten zu unterscheiden und letztere zu verwerfen. Dies erlaubt einen einfachen Aufbau des Moduls, bei dem die Zentraleinheit und die beiden Schnittstellen gemeinsam an einen Bus angeschlossen sind. Indem Broadcastdaten von der Daten an die Zentraleinheit liefernden Schnittstelle nicht auf den Bus durchgelassen werden, wird vermieden, daß die andere Schnittstelle sie von dem Bus aufnimmt, und, da sie die Daten nicht von von der Zentraleinheit gesendeten Daten zu unterscheiden vermag, erneut aussendet.

Für spezielle Betriebsarten, zum Beispiel für Situationen, wo ein Modul in kurzer Zeit große Datenmengen auf dem Übertragungsnetzwerk senden oder von diesem empfangen muß, ist es zweckmäßig, das Modul mit Mitteln auszustatten, mit denen die Zentraleinheit selektiv den Empfang beziehungsweise das Senden von Daten durch die Schnittstelle zu sperren vermag, so daß diese für die jeweils andere Tätigkeit vollständig zur Verfügung steht.

Weitere Merkmale und Vorteile der Erfindung ergeben sich aus der nachfolgenden Beschreibung von Ausführungsbeispielen mit Bezug auf die Figuren.

### Figuren

- Figur 1: zeigt ein Blockdiagramm eines erfindungsgemäßen Übertragungsnetzwerks;
- Figur 2: zeigt die zwei Schnittstellen eines der Module aus Figur 1; und
- Figur 3: zeigt eine Variante einer Schnittstelle für ein Modul aus Figur 1.

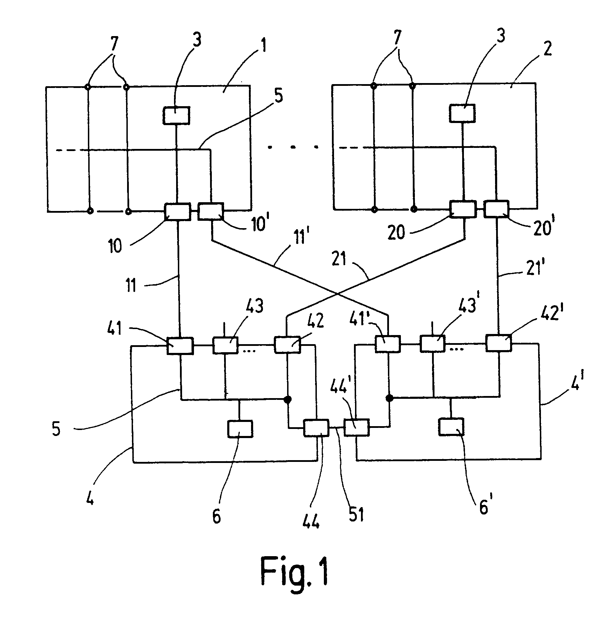

Figur 1 zeigt zwei Sender-/Empfängermodule 1,2, die jeweils zwei Schnittstellen 10,10' beziehungsweise 20,20' zu Übertragungsstrecken 11,11' beziehungsweise 21,21' des Übertragungsnetzwerks besitzen. Die Übertragungsstrecken sind an ihren anderen Enden mit Schnittstellen 41,42 beziehungsweise 41',42' von Knoten 4,4' verbunden. Weitere Schnittstellen 43,43' können in im wesentlichen beliebiger Zahl zum Anschließen weiterer, nicht dargestellter Sender-/Empfängermodule an die Knoten 4,4' vorgesehen sein.

Eine Übertragungsstrecke 51 verläuft zwischen Schnittstellen 44,44' der zwei Knoten. Zur Unterscheidung von den Übertragungsstrecken 11,11',21,21' werden letztere im folgenden als horizontal, die Verbindungsstrecke 44 als vertikal bezeichnet.

Die Knoten 4,4' zusammen mit den daran angeschlossenen horizontalen Verbindungsstrecken bilden jeweils zwei Netze mit identischer Struktur. Dies ist zwar ein sehr einfaches Beispiel einer Netzstruktur, ist aber zur Erläuterung der Prinzipien der Erfindung ausreichend.

Die Module 1,2 sowie die Knoten 4,4' verfügen jeweils über eine Zentraleinheit 3 beziehungsweise 6, die mit den Schnittstellen jeweils über einen Bus 5 kommuniziert. Die Struktur der Module und der Knoten ist insofern weitgehend ähnlich, und es ist durchaus ein Übertragungsnetzwerk denkbar, in dem ein und dieselbe Funktionseinheit gleichzeitig Funktionen eines Moduls und eines Knotens innehat.

Die Module 1,2 verfügen ferner über eine Anzahl von an den Bus angeschlossenen Ports 7 für den Datenaustausch mit Endgeräten wie etwa Telefonen, Workstations etc.

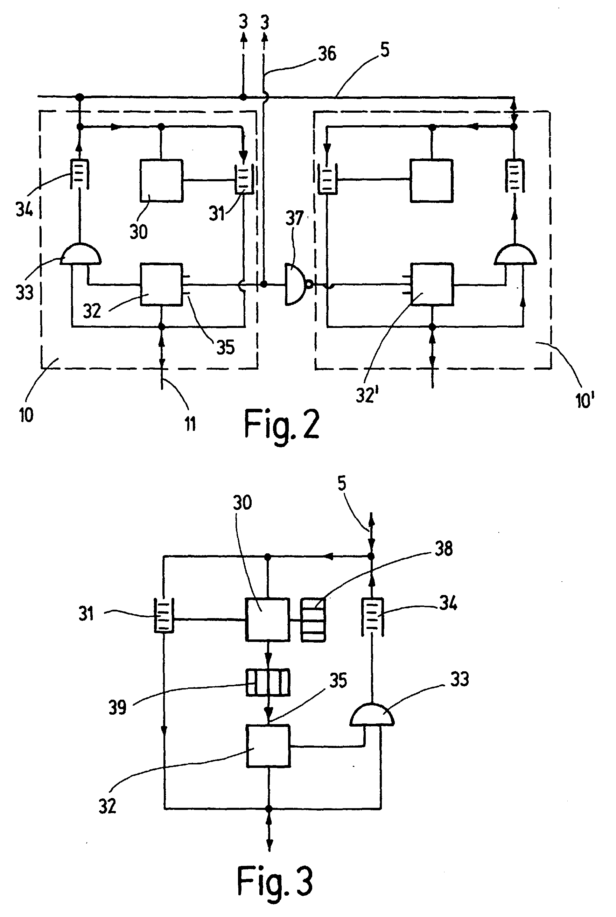

Figur 2 zeigt einen Ausschnitt aus dem Modul 1 mit einem Stück des Busses 5 und den daran angeschlossenen Schnittstellen 10,10'. Ein Adreßdecoder 30 der Schnittstelle 10 ist direkt an den Bus 5 angeschlossen und extrahiert aus auf dem Bus auftretenden Datenpaketen Adreßinformation, die eine Bestimmungsadresse des Datenpakets angibt. Diese Information wird anhand von in Registern des Adreßdecoders 30 gespeicherter Information über die Topologie des Übertragungsnetzwerks ausgewertet, um zu entscheiden, ob das betreffende Datenpaket auf der an die Schnittstelle angeschlossenen Übertragungsstrecke 11 weitergeleitet werden muß. Wenn dies der Fall ist, steuert der Adreßdecoder 30 einen Sendepuffer 31 an, der daraufhin das Paket vom Bus 5 aufnimmt und zu einer geeigneten Zeit auf der Übertragungsstrecke 11 sendet.

Ein weiterer Decoder wird als Steuerdecoder 32 bezeichnet, da seine wesentliche Aufgabe ist, aus über die Übertragungsstrecke 11 eintreffenden Datenpaketen Steuerinformation zu extrahieren und anhand dieser Steuerinformation zum Beispiel spezifisch an das Modul adressierte Datenpakete von Broadcastdatenpaketen sowie von Prüfdatenpaketen zu unterscheiden und anhand des Unterscheidungsergebnisses, hier durch Ansteuern eines Gatters 33, zu bestimmen, ob das empfangene Datenpaket in einen Empfangspuffer 34 und schließlich zum Bus 5 durchgelassen wird, oder ob es verworfen wird, um zu verhindern, daß die jeweils andere Schnittstelle des Moduls ein solches Paket, wenn es auf dem Bus 5 erscheint, mit einem in dem Modul erzeugten Paket 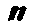 verwechselt" und aufgrund dessen erneut sendet.

Der Steuerdecoder 32 verfügt über eine Mehrzahl von Signaleingängen 35, durch die er mit von der Zentraleinheit 3 erzeugten Steuersignalen beschaltbar ist. Eines dieser Steuersignale, das über eine Leitung 36 zugeführt wird, bestimmt, ob sich die Schnittstelle in einem aktiven Zustand befindet, in dem der Steuerdecoder 32 von der Übertragungsstrecke 11 empfangene Nutzdatenpakete zum Empfangspuffer 37 durchläßt, oder ob sie sich in einem passiven Zustand befindet, in dem sie diese Datenpakete nicht durchläßt. Der entsprechende Signaleingang 35 der Schnittstelle 10 ist an die Steuerleitung 36 direkt angeschlossen, wohingegen der Signaleingang des Steuerdecoders der Schnittstelle 10' über eine Negationsschaltung 37 angeschlossen ist. So ist gewährleistet, daß sich von den zwei Schnittstellen 10,10' immer eine im passiven und die andere im aktiven Zustand befindet. Weitere Signaleingänge 35 empfangen Steuersignale, die die Sperrung der Gestelle für Broadcastpakete oder die vollständige Sperrung des Empfangs bewirken. Über einen entsprechenden Steuereingang des Adreßdecoders ist die Zentraleinheit 3 in der Lage, auch das Senden von Datenpaketen zu sperren, wenn etwa die betreffende Schnittstelle zeitweilig für den ununterbrochenen Empfang von Daten freigehalten werden soll.

Figur 3 zeigt eine Abwandlung der Schnittstellen aus Figur 2, bei der die Steuerung der Funktion der Decoder 30,32 erleichtert ist. Bei dieser Variante ist keine spezielle Signalleitung wie die Leitung 36 zwischen einem der Decoder 30,32 und der Zentraleinheit 3 vorgesehen, stattdessen ist die Zentraleinheit 3 eingerichtet, um spezielle Datenpakete zu erzeugen, die Steuerinformationen für die Schnittstellen enthalten, und sie an diese zu adressieren. Der Adreßdecoder 30 erkennt die Tatsache, daß ein Paket für ihn bestimmte Steuerinformation enthält, an einem bestimmten Bit im Header des Pakets, und, gemäß einer weiterentwickelten Variante, zusätzlich daran, daß er zuvor über den Bus ein spezielles Datenpaket empfangen hat, das allein dazu dient, ein bevorstehendes Paket mit Steuerinformation anzukündigen. Der Adreßdecoder 30 wertet die Steuerinformation des Paketes aus und trägt Information, die für seine eigene Arbeitsweise relevant ist, in ein Register 38 ein, mit dem er für Schreib- und Lesezugriff verbunden ist. In dieses Register kann zum Beispiel ein Bit eingetragen werden, das den Adreßdecoder 30 veranlaßt, keine Pakete mehr in den Sendepuffer 31 einzulassen, so daß die Schnittstelle ausschließlich für den Empfang von Daten zur Verfügung steht.

Steuerinformationen, die die Funktionsweise des Steuerdecoders 32 betreffen, werden in ein Register 39 eingetragen, dessen Ausgänge an die Signaleingänge 35 des Steuerdecoders 35 angeschlossen sind und die dessen Arbeitsweise in der gleichen Weise wie oben mit Bezug auf Figur 2 beschrieben, bestimmen.

Es soll nun die Arbeitsweise eines Übertragungsnetzwerks beschrieben werden, das mit Schnittstellen gemäß Figur 3 ausgestattet ist. Bei Aufnahme des Betriebs sendet die Zentraleinheit 3 eines jeden Moduls 1,2 ein Paket mit Steuerinformation an ihre Schnittstelle 10 beziehungsweise 20, welches diese veranlaßt, ihren aktiven Zustand einzunehmen, in dem sie über eine Übertragungsstrecke empfangene Nutzdatenpakete auf den Bus 5 weitergibt. Entsprechend erhält die Schnittstelle 10' beziehungsweise 20' ein Datenpaket, das sie veranlaßt, den passiven Zustand einzunehmen. Auf dem Bus 5 des Moduls 1 auftretende Datenpakete werden von den Schnittstellen 10,10' in gleicher Weise aufgenommen und an die Knoten 4 beziehungsweise 4' und von dort an die Schnittstellen 20,20' eines Empfängermoduls 2 weitergeleitet, die nach dem gleichen Verfahren initialisiert sind. Ein eintreffendes Nutzdatenpaket wird so in der Schnittstelle 20' abgefangen, von der Schnittstelle 20 aber auf den Bus des Empfängermoduls 2 durchgelassen.

Zur Überwachung der Unversehrtheit des Übertragungsnetzwerks werden zwischen den Zentraleinheiten 3 und 6 der Module und der Knoten regelmäßig Prüfpakete ausgetauscht. Ein von dem Knoten 4 gesendetes Prüfpaket wird von der Schnittstelle 10 in der gleichen Weise wie ein Nutzdatenpaket durchgelassen, woraufhin die Zentraleinheit 3 ein Antwort-Prüfpaket an den Knoten 4 adressiert und auf dem Bus ausgibt. Das Antwort-Prüfpaket wird von der Schnittstelle 10 zurück zum Knoten 4 gesendet; und dessen Zentraleinheit 6 erkennt am Eintreffen des Pakets, daß die Verbindungsstrecke 11 intakt ist. Ein in gleicher Weise vom Knoten 4' gesendetes Prüfpaket erreicht die passive Schnittstelle 10', wird von dessen Steuerdecoder 32 als Prüfpaket erkannt und deshalb trotz des passiven Status der Schnittstelle auf den Bus 5 durchgelassen. Die Zentraleinheit 3 erzeugt wiederum ein Antwort-Datenpaket, diesmal an den Knoten 4' adressiert, an dem die Zentraleinheit 6' erkennt, daß die Übertragungsstrecke 11' intakt ist.

Wenn ein solches Antwort-Datenpaket zum Beispiel die Zentraleinheit 6 nicht innerhalb einer vorgegebenen Zeitspanne erreicht, erkennt die Zentraleinheit 6 daran eine Störung der Übertragungsstrecke 11 und sendet über die vertikale Übertragungsstrecke 51 eine Mitteilung an die Zentraleinheit 6', um diese zu veranlassen, über die zweite Übertragungsstrecke 11' des Moduls 1 empfangene Datenpakete über die vertikale Verbindungsstrecke 51 zum Knoten 4 zu übertragen, wo sie in gleicher Weise weiterverarbeitet werden, wie wenn sie direkt über die Übertragungsstrecke 11 empfangen worden wären. So erreichen vom Modul 1 gesendete Datenpakete trotz der Störung die aktive Schnittstelle 20 des Empfängermoduls 2. Dessen Arbeitsweise ändert sich somit durch die Störung in keiner Weise.

Wenn die Zentraleinheit 3 des Moduls 1 während einer vorgegebenen Zeitspanne keine Prüfpakete vom Knoten 4 erhält, kann vorgesehen werden, daß sie daran ihrerseits eine Störung der Übertragungsstrecke 11 erkennt und daraufhin die Schnittstelle 10 in den passiven und die Schnittstelle 10' in den aktiven Zustand unschaltet.

Falls die Schnittstelle 10 eine Schnittstelle nach Figur 3 ist, besteht ferner die Möglichkeit, daß die Zentraleinheit 6' als Prüfdatenpaket gekennzeichnete Pakete mit Steuerinformation an das Modul 1 sendet, die an dessen Schnittstelle 10 oder 10' adressiert sind. Infolge ihrer Kennzeichnung läßt die Schnittstelle 10' diese Pakete durch zum Bus 5, und der direkt an den Bus angeschlossene Adreßdecoder 30 einer der beiden Schnittstellen erkennt das Paket als an sich adressiert und wertet die darin enthaltende Steuerinformation aus. So ist es zum Beispiel möglich, ohne direkte Beteiligung der Zentraleinheit 3 die Betriebszustände der Schnittstellen 10,10' zu vertauschen. Die Zentraleinheit braucht daher auf die aufgetretene Störung nicht zu reagieren; die Rekonfigurierung des Übertragungsnetzwerks kann ohne ihre Beteiligung stattfinden.

## Patentansprüche

1. Übertragungsnetzwerk mit einer Mehrzahl von Sender-/Empfängermodulen (1,2), von Übertragungsstrecken (11,11',21,21') zum Übertragen von Daten zwischen den Sender-/Empfängermodulen und von die Übertragungsstrecken miteinander verbindenden Knoten (4,4') zum selektiven Weiterleiten der Daten von einer Übertragungsstrecke auf eine andere, wobei die Übertragungsstrecken teilweise redundant sind, um die Übertragung der Daten auf unterschiedlichen Wegen zu ermöglichen, **dadurch gekennzeichnet,** daß die Übertragungsstrecken (11,11';21,21') und die Knoten (4,4') zwei Netze (11,21,4;11',21',4') mit identischer Struktur bilden, und daß die Sender-/Empfängermodule (1,2) mit jedem der zwei Netze über jeweils eine Schnittstelle (10,10';20,20') verbunden sind.

2. Übertragungsnetzwerk nach Anspruch 1, **dadurch gekennzeichnet,** daß jedes Sendermodul (1) ein an ein Empfängermodul (2) zu übertragendes Nutzdatenpaket in gleicher Weise an beide Netze ausgibt.

3. Übertragungsnetzwerk nach Anspruch 2, **dadurch gekennzeichnet,** daß die zwei Netze empfangene Daten unabhängig voneinander übertragen.

4. Übertragungsnetzwerk nach Anspruch 3, **dadurch gekennzeichnet,** daß jedes Empfängermodul (2) von zwei in gleicher Weise über beide Netze empfangenen Nutzdatenpaketen nur eines berücksichtigt.

5. Übertragungsnetzwerk nach einem der vorhergehenden Ansprüche, **dadurch gekennzeichnet,** daß die Knoten (4,4') der zwei Netze durch als vertikal bezeichnete Übertragungsstrecken (51) verbunden sind.

6. Übertragungsnetzwerk nach Anspruch 5, **dadurch gekennzeichnet,** daß die Knoten (4,4') Datenpakete von Sendermodulen (1) oder für Empfängermodule (1), die von einer Störung einer Übertragungsstrecke betroffen sind, über die vertikale Verbindungsstrecke (51) übertragen.

7. Übertragungsnetzwerk nach einem der vorhergehenden Ansprüche, **dadurch gekennzeichnet,** daß die Knoten (4,4') miteinander und/oder mit den Sender-/Empfängermodulen (1,2) Prüfdatenpakete austauschen, um Störungen von Verbindungsstrecken zu erfassen.

8. Sender-/Empfängermodul für ein Übertragungsnetzwerk, insbesondere nach einem der vorhergehenden Ansprüche, **dadurch gekennzeichnet,** daß es eine Zentraleinheit (3) als Quelle und/oder Senke von Daten und zwei parallel an die Zentraleinheit (3) angeschlossene Schnittstellen (10,10') zum Anschließen an Verbindungsstrecken (11,11') des Übertragungsnetzwerks umfaßt, wobei die Schnittstellen (10,10') von der Zentraleinheit (3) gelieferte Nutzdaten in gleicher Weise senden, wohingegen nur eine der Schnittstellen (10) empfangene Nutzdaten an die Zentraleinheit liefert und die andere (10') sie verwirft.

9. Sender-/Empfängermodul nach Anspruch 8, **dadurch gekennzeichnet,** daß es über Mittel (35,36,37;39) verfügt, um zu bestimmen, welche der Schnittstellen (10,10') Nutzdaten liefert, und welche sie verwirft.

10. Sender-/Empfängermodul nach einem der Ansprüche 8 oder 9, **dadurch gekennzeichnet,** daß jede Schnittstelle (10,10') über Mittel (32) verfügt, um empfangene Nutzdaten von Prüfdaten zu unterscheiden und Prüfdaten auch dann an die Zentraleinheit (3) zu liefern, wenn sie Nutzdaten verwirft.

11. Sender-/Empfängermodul nach einem der Ansprüche 8 bis 10, **dadurch gekennzeichnet,** daß jede Schnittstelle (10,10') über Mittel 32 verfügt, um empfangene, spezifisch an das Modul (1) adressierte Daten von Broadcastdaten zu unterscheiden und letztere zu verwerfen.

12. Sender-/Empfängermodul nach einem der Ansprüche 8 bis 11, **dadurch gekennzeichnet,** daß es über Mittel (35;39) zum selektiven Sperren des Sendens und/oder Empfangs von Nutzdaten über jede Schnittstelle (10,10') verfügt.
